# EUROPÄISCHE PATENTSCHRIFT

(11) **EP 0 373 390 B1**
(45) Veröffentlichungstag und Bekanntmachung des Hinweises auf die Patenterteilung: **19.05.1993**
(21) Anmeldenummer: 89121505.5
(22) Anmeldetag: 21.11.1989
(51) Int. Cl.: A01D 34/64

(54) **Mähwerk für Dreipunktanbau**
Mowing apparatus for three-point linkage
Faucheuse pour attelage à trois points

(30) Priorität: 10.12.1988 DE 3841626
(43) Veröffentlichungstag der Anmeldung: 20.06.1990
(73) Patentinhaber: CLAAS SAULGAU GMBH, D-88340 Saulgau (DE)
(72) Erfinder: Arnold, Rudolf, D-7968 Saulgau (DE)

(56) Entgegenhaltungen:
- AT-B- 295 212
- DE-A- 2 830 509

## Beschreibung

Die Erfindung bezieht sich auf ein Mähwerk nach dem Oberbegriff des Anspruches 1. Bei diesen bekannten Mähwerken (beispielsweise DE-A-2830509) ist die am Zwischenträger angreifende Strebe andernendig an einer am Tragrahmen schwenkbar gelagerten Wippe angelenkt, die mit ihrem anderen Hebelarm mit einer zum Mähbalken führenden zweiten Strebe verbunden ist. Eine vertikale Schwenkbewegung des Zwischenträgers gegenüber dem Tragrahmen über das Spiel eines in der Strebe vorgesehenen Langloches hinaus bewirkt somit über die Wippe und die zweite Strebe eine entgegengesetzte vertikale Schwenkbewegung des Mähbalkens gegenüber dem Zwischenträger. Dadurch ist es möglich, daß durch die hohen Beschleunigungskräfte bei schneller Fahrt bzw. bei Störung des statischen Gleichgewichtes im Aufhängesystem des Mähwerkes durch beispielsweise Gewichtsveränderung der Mähwerksgruppe, das Mähwerk an der Gelenkstelle des Zwischenträgers mit dem Mähbalken nach oben oder nach unten einknickt. Ein ähnliches Beispiel gibt auch die DE-A-26 30 493 und in abgewandelter Form die DE-B 12 95 908.

Die Aufgabe dieser Erfindung ist es, diese Möglichkeit des unerwünschten Einknickens des Mähbalkens gegenüber dem Zwischenträger in ausgehobener Lage des Mähwerkes zu vermeiden.

Dies wird nach den kennzeichnenden Merkmalen des Anspruches 1 damit erreicht, daß der Schwenkhebel Koaxial zu dem den Schlitz der Strebe durchsetzenden Bolzen gelagert ist, wobei nach einem Vorschlag der Erfindung dieser Bolzen eine Verlängerung der Drehachse zwischen Zwischenträger und Mähbalken sein kann. Bei einer solchen Gestaltung und Anordnung wird außerdem eine konstruktiv einfache und damit kostengünstige Ausführung erreicht.

Die Erfindung wird anhand von 5 Abbildungen beispielsweise erläutert.
- Fig. 1: zeigt ein Mähwerk in Arbeitsstellung auf ebenem Gelände in Ansicht von hinten,
- Fig. 2: den gleichen Gegenstand in Arbeitsstellung an einer abfallenden Böschung,
- Fig. 3: den gleichen Gegenstand an einer ansteigenden Böschung,
- Fig. 4: den gleichen Gegenstand in ausgehobener Stellung,
- Fig. 5: ein Mähwerk mit einem hydraulisch hochklappbaren Mähbalken.

Das Mähwerk besitzt einen Tragrahmen (1), mit dem es am Dreipunktgestänge eines Schleppers anbaubar ist. Am Tragrahmen (1) ist ein Zwischenträger (2) in vertikaler Richtung schwenkbar gelagert. An seinem freien Ende ist der Zwischenträger (2) mittels einer Drehachse (3) mit dem Mähbalken (4), der Mähtrommeln (5) trägt, gelenkig verbunden. An Verlängerungen der Drehachse (3) ist ein Schwenkhebel (6) drehbar gelagert. Er hat nahe seines freien Endes Anlenkpunkte (7) und (8). Am oberen Ende des Tragrahmens (1) ist ein inneres Zugglied (9) drehbar befestigt, das mit dem Anlenkpunkt (7) des Schwenkhebels (6) verbunden ist. Ein äußeres Zugglied (10) verbindet den Anlenkpunkt (8) mit einem am äußeren Ende des Mähbalkens (4) befestigten Zapfen (11). Das äußere Zugglied (10) besitzt einen Schlitz (12), der von dem Zapfen (11) durchsetzt wird. Unterhalb des inneren Zuggliedes (9) ist eine Strebe (13) mit einem Schlitz (14) angeordnet, die an einem Ende mit dem Tragrahmen (1) und am anderen Ende mit der Drehachse (3) verbunden ist.

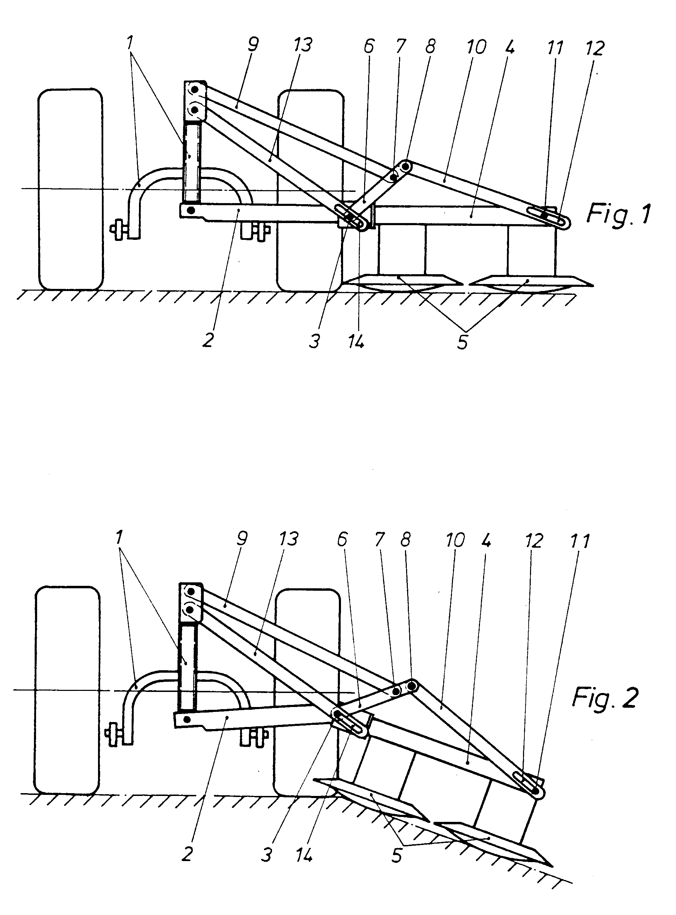

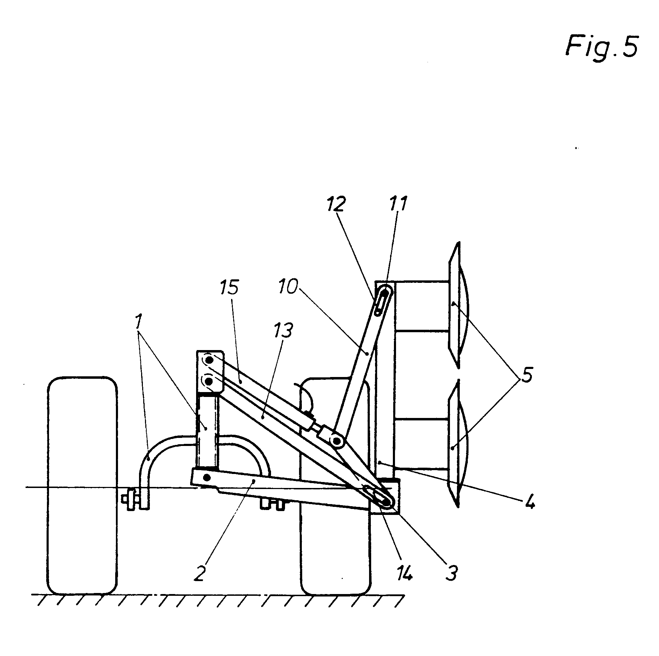

Wie in Figur (1) dargestellt, stehen in normaler Arbeitsstellung die Drehachse (3) und der Zapfen (11) in der Mitte der Schlitze (14) und (12). Die beiden Mähtrommeln (5) können sich Unebenheiten des Bodens anpassen und nach oben und unten ausweichen. Bei der Arbeit an einer abfallenden Böschung (Fig. 2) kann die innere Mähtrommel (5) den Mähbalken (4) und den Zwischenträger (2) so weit anheben, bis die Drehachse (3) am inneren Ende des Schlitzes (14) anliegt. Die äußere Mähtrommel (5) kann so weit abgesenkt werden, bis der Zapfen (11) am äußeren Ende des Schlitzes (12) anliegt. Wenn der Tragrahmen (1) in dieser Stellung angehoben wird, wird unter Wirkung der Zugglieder (9, 10) zunächst das äußere Ende des Mähbalkens (4) angehoben, während die innere Mähtrommel (5) so lange auf dem Boden bleibt, bis die Drehachse (3) das äußere Ende des Schlitzes (14) erreicht hat. Von da an wird der Mähbalken (4) etwa horizontal (oder aussen etwas höher) angehoben und erreicht schließlich die in Fig. 4 dargestellte Stellung.

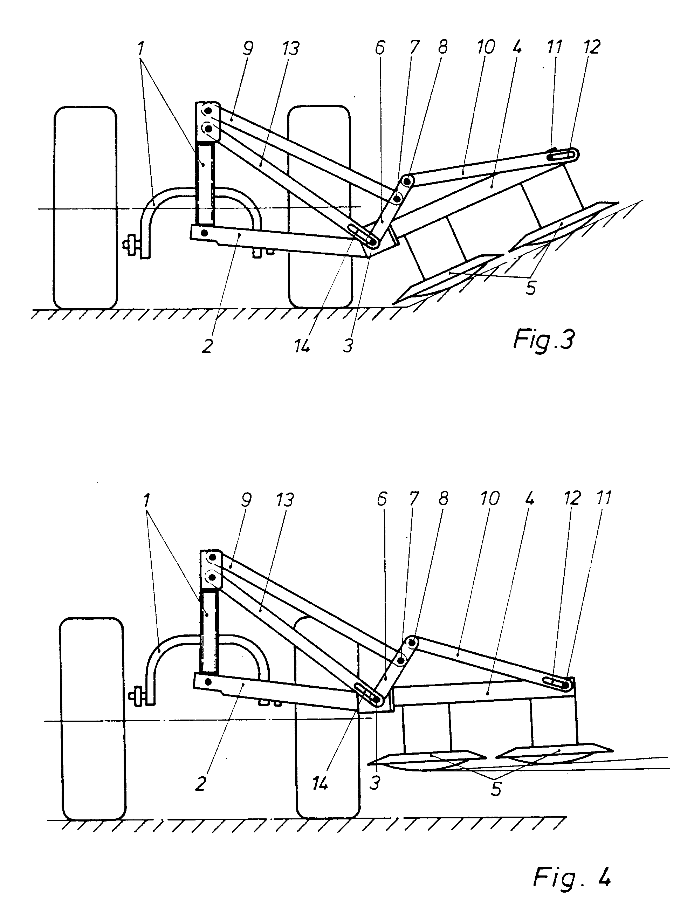

Fig. 3 zeigt das Mähwerk an einer ansteigenden Böschung arbeitend. Die Drehachse (3) und der Zapfen (11) stehen jetzt an den jeweils anderen Enden der Schlitze (12, 14) als in Fig. 2. Wird der Tragrahmen (1) aus dieser Stellung angehoben, so folgt die innere Mähtrommel (5) der Bewegung sofort, während die äußere Mähtrommel (5) so lange am Boden verbleibt, bis der Mähbalken (4) etwa horizontal steht. Endlage ist wieder die in Fig. 4 dargestellte. In dieser Lage können beim schnellen Befahren unebenen Bodens große senkrechte Beschleunigungskräfte auftreten. Da aber die Beweglichkeit der inneren und äußeren Partie des Mähbalkens (4) durch die Länge der Schlitze (12, 14) begrenzt ist, kann die Gelenkkette bei der Drehachse (3) niemals nach unten oder oben durchknicken.

In Fig. 5 ist eine andere Ausführung eines Mähwerkes gezeigt. An die Stelle des inneren Zuggliedes (9) (Fig. 1 - 4) tritt hier ein hydraulischer Hubzylinder (15), mit dem der Mähbalken (4) nach Anheben des Tragrahmen (1) zusätzlich in eine etwa senkrechte Transportstellung verbracht werden kann.

## Patentansprüche

1. Mähwerk mit einem über einen Tragrahmen (1) an die Dreipunktaufhängung eines Schleppers anschließbaren, mit umlaufend angetriebenen Mähwerkzeugen (5) versehenen Mähbalken (4), der durch eine Gelenkkette mit dem Tragrahmen (1) verbunden ist, welche aus einem zwischen dem Mähbalken (4) und dem Tragrahmen (1) angelenktem Zwischenträger (2), einem an diesem schwingbar gelagerten Schwenkhebel (6) und einer vom Tragrahmen (1) über den Schwenkhebel (6) bis zum Mähbalken (4) führenden Zugverbindung (9, 10) besteht, wobei zwischen dem Tragrahmen (1) und dem Zwischenträger (2) eine Strebe (13) eingeschaltet ist, die über einen endseitig vorgesehenen und von einem Bolzen am Zwischenträger (2) durchsetzten Schlitz (14) die freie Beweglichkeit des Zwischenträgers (2) nach oben und unten begrenzt **dadurch gekennzeichnet,** daß der Schwenkhebel (6) Koaxial zu dem den Schlitz (14) der Strebe (13) durchsetzenden Bolzen gelagert ist.

2. Mähwerk nach Anspruch 1, dadurch gekennzeichnet, daß der den Schlitz (14) der Strebe (13) durchsetzende Bolzen eine Verlängerung der Drehachse (3) zwischen Zwischenträger (2) und Mähbalken (4) ist.

## Claims

1. A mower comprising a mower bar (4) which can be connected by way of a support frame (1) to the three-point suspension of a tractor and which is provided with mowing implements (5) which are driven in rotation, the mowing bar (4) being connected to the support frame (1) by a link assembly which comprises an intermediate bearer (2) pivoted between the mowing bar (4) and the support frame (1), a pivot lever (6) which is pivotably mounted to the intermediate bearer, and a traction connection (9, 10) which goes from the support frame (1) by way of the pivot lever (6) to the mowing bar (4), wherein interposed between the support frame (1) and the intermediate bearer (2) is a strut (13) which limits the free mobility of the intermediate bearer (2) upwardly and downwardly by way of a slot (14) which is provided at the end of the strut and through which passes a pin on the intermediate bearer (2), characterised in that the pivot lever (6) is mounted coaxially with the pin which passes through the slot (14) in the strut (13).

2. A mower according to claim 1 characterised in that the pin which passes through the slot (14) in the strut (13) is a prolongation of the rotary axis (3) between the intermediate bearer (2) and the mowing bar (4).

## Revendications

1. Faucheuse comprenant une barre de coupe (4) pouvant être raccordée par l'intermédiaire du châssis de support (1) à l'attelage à trois points d'un tracteur et munie d'outils de coupe (5) entraînés en rotation, la barre de coupe étant reliée par une chaîne d'articulations au châssis de support (1), cette chaîne étant constituée par une entretoise (2) raccordée entre la barre de coupe (4) et le châssis de support (1), un levier pivotant (6) monté de façon oscillante sur l'entretoise et des organes de traction (9, 10) allant du châssis de support (1) à la barre de coupe (4) par l'intermédiaire du levier pivotant (6), une jambe de force (13) étant interposée entre le châssis de support (1) et l'entretoise (2), qui limite la mobilité de l'entretoise (2) vers le haut et vers le bas au moyen d'une fente (14) prévue à une extrémité et traversée par un tourillon qui est prévu sur l'entretoise (2), caractérisée en ce que le levier pivotant (6) est monté coaxialement au tourillon qui traverse la fente (14) de la jambe de force (13).

2. Faucheuse selon la revendication 1, caractérisée en ce que le tourillon qui traverse la fente (14) de la jambe de force (13) est constitué par un prolongement de l'axe de rotation entre l'entretoise (2) et la barre de coupe (4).
